# EUROPÄISCHE PATENTSCHRIFT

(11) **EP 1 712 270 B1**
(45) Veröffentlichungstag und Bekanntmachung des Hinweises auf die Patenterteilung: **12.12.2007**
(21) Anmeldenummer: 06004672.9
(22) Anmeldetag: 08.03.2006
(51) Int. Cl.: B01D 71/76, B01D 71/64

(54) **Kompositmaterial, insbesondere Kompositmembran und Verfahren zur Herstellung desselben**
Composite material, especially composite membrane and process of manufacture
Matériau composite, en particulier membrane composite et son procédé de fabrication

(30) Priorität: 13.04.2005 DE 102005017195
(43) Veröffentlichungstag der Anmeldung: 18.10.2006
(73) Patentinhaber: GKSS-Forschungszentrum Geesthacht GmbH, 21502 Geesthacht (DE)
(72) Erfinder: Fritsch, Detlev, Dr., 21465 Reinbek (DE); Peinemann, Klaus-Viktor, Dr., Prof., 21502 Geesthacht (DE); De Figueiredo Gomes, Dominique, Dr., 21641 Apensen (DE)
(74) Vertreter: Seemann, Ralph

(56) Entgegenhaltungen:
- DE-A- 3 140 520
- DE-A- 3 618 840
- US-A- 4 584 359
- US-A- 4 981 561

## Beschreibung

Die Erfindung betrifft ein Kompositmaterial, insbesondere eine Kompositmembran, insbesondere zur Gastrennung, Dämpfetrennung oder Pervaporation, umfassend wenigstens ein erstes Polymer und ein zweites Polymer. Die Erfindung betrifft ferner ein Verfahren zur Herstellung eines Kompositmaterials, insbesondere einer Kompositmembran.

Technisch eingesetzte Polymermembranen für die Gastrennung sind in der Regel Kompositmembranen, die aus einer porösen Unterstruktur und einem porenfreien, dichten Polymerfilm bestehen. Hierfür wird ein Kompositmaterial verwendet, bzw. die Kompositmembran umfasst ein entsprechendes Kompositmaterial. Für die technische Verwertbarkeit ist es unabdingbar, hohe Gasflüsse pro Fläche zu erreichen, um die Membranflächen und die Energiekosten gering zu halten. Die mögliche Selektivität und der Gasfluss sind von den Polymereigenschaften vorgegeben. Proportional zur steigenden Schichtdicke fällt der Fluss und die Selektivität bleibt im Wesentlichen gleich. Es kommt also darauf an, geeignete Materialien zu finden und diese zu möglichst kleinen Schichtdicken zu Komposit- oder integralasymmetrischen Membranen zu verarbeiten.

Die zur Auswahl stehenden polymeren Materialien können grob in Elastomere und glasartige Polymere unterteilt werden, die sich durch die Lage der Glasübergangstemperatur oberhalb bzw. unterhalb der Raumtemperatur unterscheiden. Beide Polymertypen kommen für die Gastrennung in Frage. Optimierte, technisch eingesetzte Membranen werden in der Regel bei Schichtdicken der trennaktiven Schicht von 0.5 bis 1 µm eingesetzt.

Eine Verbesserung der Trenneigenschaften per se bekannter Polymere konnte durch den Zusatz poröser Materialien erreicht werden. Durch den Zusatz des Feststoffes zum Polymer entsteht ein Material mit einer gemischten Matrix von anorganisch/organischen Bestandteilen. Nach diesem Prinzip hergestellte Membranen sind als "mixed matrix membranes" bekannt [Koros, et al. US-A- 6,585,802]. Es konnte sowohl die Permeabilität als auch die Selektivität verbessert werden, im Idealfall sogar Permeabilität und Selektivität. Hierbei muss die Korngröße der zugesetzten porösen Strukturen wesentlich kleiner als die angestrebte Schichtdicke sein, um dichte Filme mit eingebetteten porösen Feststoffen zu erhalten.

Als poröse Feststoffe zum Einbau in die polymere Matrix sind Zeolithe (Molekularsiebe), Aluminiumoxide (Böhmit, γ-Aluminiumoxid), Siliziumdioxide, Fullerene [Polotskaya et al., Fuller. Nanotub. Carbon Nanostruct. 12 (2004) 371-376] oder Kohlenstoff-Molekularsiebe [Vu et al., J. Membrane Sci. 211 (2003) 311-334] bereits untersucht worden. Generell ist die Verträglichkeit der beiden Komponenten Polymer - poröser Füllstoff sehr wichtig. Bei nicht kompatiblen Materialien (Feststoff-Polymer) entstehen an den Berührungspunkten Fehlstellen, die die Gasselektivität verringern und damit für die technische Anwendung unbrauchbar machen. Im Allgemeinen lassen sich Elastomere besser zu fehlstellenfreien Membranen verarbeiten als glasartige Polymere.

Bisher wurden vor allem Zeolite (Molekularsiebe) in Elastomermembranen aus Polydimethylsiloxan eingearbeitet [D. Paul et al. J. Polymer Sci., 41 (1973) 79; M. Jia et al. J. Membrane Sci., 57 (1991) 289], wobei unter Verwendung von Zeolit Typ 5A (Paul, et. al.) keine Verbesserung der Membraneigenschaften erreicht wurde, bei Zeolit Typ ZSM-5 (Jia et al.) wurde sowohl eine Erhöhung der Permeabilität als auch der Selektivität gefunden. Zeolit ZSM-5 ergab bei Einbau in Celluloseacetatmembranen ebenfalls verbesserte Membranen [Kulprathipanja et al. (US 4,740,219 and 5,127,925)]. In anderen glasartigen Polymeren, die sich durch besonders attraktive Gasselektivität auszeichnen, wurde auch durch eine spezielle Behandlung der Zeolite zur Verbesserung der Kompatibilität Zeo-Iit/Polymer keine deutliche Steigerung der Selektivität gefunden [Gur, J. Membrane Sci., 93 (1994) 283; Duval et al. J. Membrane Sci., 80 (1993) 189 (1993) und J. Appl. Polymer Sci., 54 (1994) 409]. Durch den Zusatz von Weichmachern kann die Verträglichkeit Füllstoff/Polymer verbessert werden [Mahajan, et al. J. Appl. Polym. Sci. 86 (2002) 881-890].

Die Zugabe von Weichmachern verbessert zwar den fehlstellenfreien Einbau der anorganischen Feststoffe, jedoch kann der Weichmacher ausbluten und verflüchtigt sich trotz seines geringen Dampfdruckes bei der intensiven Durchspülung mit Gas in der Membrananwendung. Dadurch geht der positive Einfluss des Weichmachers graduell mit den verbesserten Gastrenneigenschaften verloren. Eine langzeitstabile Membran sollte damit nicht hergestellt werden können.

Besonders wichtig ist die absolute Freiheit von Fehlstellen in Form durchgehender Meso- oder Makroporen, die einen Teilstrom der Gasmenge ohne Trennwirkung passieren lassen. Schon bei wenigen Fehlstellen verringert dieser Teilstrom die Selektivität beträchtlich unter den Wert, der für die technische Umsetzung erforderlich ist. Die bisher verwendeten, oben beschriebenen Materialklassen haben gemeinsam, dass sie sich nur mit wenigen polymeren Materialien gut vertragen. So z.B. mit dem Elastomer Polydimethylsiloxan, das aber wiederum nur eine geringe Selektivität gegenüber O₂/N₂ oder CO₂/CH₄ besitzt. Glasartige Polymere, mit meist guten Selektivitäten gegenüber diesen Gaspaaren vertragen sich in der Regel nicht mit diesen anorganischen, porösen Stoffen und lassen sich auch mit Hilfsmitteln nicht unbedingt auf der molekularen Ebene aneinander anpassen [Mahajan et al., Polym. Eng. Sci. 42 (2002) 1420-1431 und ebenda pp 1432-1441].

In US-A-4 584 359 wird eine Membran mit einem Vinylpolymer und Koordinationspolymeren mit Kobalt-Komplexen beschrieben. Die Membran weist eine sehr gute Permeabilität für Sauerstoff sowie Lebensdauer auf, da die Membran sauerstoffübertragende Gruppen in chemisch gebundener Form enthält. Es wird beschrieben, dass ein solches Koordinationspolymer auf eine mikroporöse Membran gegeben wird, die beispielsweise aus Polyethylen, Polypropylen oder Polytetrafluorethylen besteht. Zur Herstellung der entsprechenden Membran wird ein Koordinationspolymer in Pyridin gelöst und eine mikroporöse Polyethylenmembran in diese Lösung getaucht, so dass sich das Koordinationspolymer in die mikroporöse Polyethylenmembran absetzt, wenn diese Membran langsam getrocknet wird. Eine solche Membran ist zur Gastrennung geeignet.

Es ist Aufgabe der vorliegenden Erfindung, ein alternatives Kompositmaterial bzw. eine alternative Kompositmembran sowie ein Verfahren zur Herstellung desselben bzw. derselben anzugeben, mittels der eine hohe Permeabilität und Selektivität ermöglicht wird.

Gelöst wird diese Aufgabe durch ein Kompositmaterial, insbesondere eine Kompositmembran, insbesondere zur Gastrennung oder zur Pervaporation, umfassend wenigstens ein erstes Polymer und ein zweites Polymer, wobei das zweite Polymer ein Koordinationspolymer ist, das dadurch weitergebildet ist, dass das Koordinationspolymer eine metallorganische Gerüststruktur mit permanenter Porösität ist.

Durch den Zusatz von kostengünstigen Koordinationspolymeren zu ansonsten für die Membranherstellung üblichen Polymeren können Kompositmaterialien mit neuen Eigenschaften hergestellt werden. Diese Eigenschaften ermöglichen eine hohe Permeabilität und auch eine hohe Selektivität des Kompositmaterials bzw. einer daraus hergestellten Membran. Wenn dem ersten Polymer ein Koordinationspolymer hinzugefügt wird, das eine metallorganische Gerüststruktur mit permanenter Porösität ist, kann die Gaspermeabilität des Kompositmaterials bzw. einer entsprechenden Kompositmembran bei gleicher Dicke im Vergleich zu üblichen Membranen erhöht werden. Dieses liegt an einem relativ großen, zugänglichen Volumen im Inneren des Kompositmaterials, hervorgerufen durch die Porösität der metallorganischen Gerüststruktur (die im Folgenden MOF genannt wird).

Vorzugsweise liegt das Koordinationspolymer in Kristallform, insbesondere in Kristall-Clustern, vor. Die Kristall-Cluster haben vorzugsweise eine Erstreckung von ungefähr 0,1 µm bis 50 µm und insbesondere vorzugsweise von 0,4 µm bis 10 µm. Bei einer Kompositmembran ist die Erstreckung vorzugsweise im Bereich von 0,1µm bis 1 µm, insbesondere bei 0,5 µm. Vorzugsweise ist das Koordinationspolymer katalytisch aktiv. Bei Verwendung einer entsprechenden sorptionsselektiven Gerüststruktur kann die Selektivität entsprechend gesteigert werden. Es kann eine Anwendung als Membran für die Gas- oder Dämpfetrennung oder einer Lastwechsel-Adsorption (Pressure-Swing) vorgesehen sein. Bei entsprechenden Koordinationspolymeren bzw. metallorganischen Gerüststrukturen (MOF von Metal Organic Frameworks) sind Polymere, die aus vielen niedermolekularen Liganden aufgebaute Hauptketten umfassen, die durch Metallkomplexe und damit durch koordinative bzw. ionische Bindungen zusammengehalten werden. Die Entfernung der Metallzentren geht bei den Koordinationspolymeren üblicherweise einher mit dem Abbau der Polymerketten zu niedermolekularen Produkten.

Vorzugsweise ist das erste Polymer als Polymermatrix ausgebildet. Die Polymermatrix ist dann beispielsweise um das zweite Polymer in Form des Koordinationspolymers ausgebildet und hält insofern die Kompositmaterialstruktur zusammen. Das zweite Polymer ist insofern eine Art Füllstoff für das Kompositmaterial bzw. die Kompositmembran. Vorzugsweise ist das erste Polymer ein Material, aus dem eine dichte Membran herstellbar ist. Bei einer dichten Membran ist der Stofftransport durch die Membran durch einen Transportvorgang in Form einer Diffusion und Sorption und nicht in Form einer Konvektion gegeben.

Vorzugsweise weist das Koordinationspolymer eine Größe der Elementarzelle im Bereich von 0,3 bis 10 nm, insbesondere 0,5 bis 1 nm, auf.

In besonders bevorzugten Ausführungsbeispielen sind in die Hohlräume Interkalate eingebracht. Die Interkalate sind bevorzugt Cr, Mu, Fe, Co, Ni, Cu, Mo, Ru, Rk, Pd, Ag, In, Sn, W, Re, Os, Ir, Pt, Au, Pb, Ce und /oder La. Bei den Interkalaten kann es sich somit um katalytisch reaktive Interkalate bzw. Stoffe handeln, wie beispielsweise Palladium, Zink oder Platin. Durch Interkalieren derartiger Materialien können die katalytischen Eigenschaften der metallorganischen Gerüststruktur erhalten bleiben, so dass diese mit den Eigenschaften der Membran zum selektiven Stofftransport in einem Membranreaktor angewendet werden können.

Vorzugsweise ist die Oberfläche des Koordinationspolymers zu mehr unpolar oder mehr polar modifiziert. Durch diese bevorzugte Ausgestaltung des Kompositmaterials ist die Verträglichkeit des Koordinationspolymers zu dem ersten Polymer regelmäßig verbessert. Hierbei kann eine vorher polare Oberfläche wenigstens teilweise oder vollständig unpolar modifiziert sein.

In einer besonders bevorzugten Ausführungsform der Erfindung ist eine Gasselektivität von mehr als 13, insbesondere mehr als 16, für das Verhältnis von n-Butan zu Methan oder von CO₂ zu CH₄ vorgesehen.

Vorzugsweise ist eine Kompositmembran umfassend eine dünne Schicht, insbesondere mit einer Dicke von 0,3 µm bis 2 µm, insbesondere im Bereich von 0,5 bis 1 µm, die auf einer porösen Unterlage aufgebracht ist, vorgesehen.

Die Aufgabe wird ferner durch ein Verfahren zur Herstellung eines Kompositmaterials, insbesondere einer Kompositmembran, die insbesondere vorstehend beschrieben ist, gelöst, wobei ein Koordinationspolymer in ein, insbesondere flüssiges, erstes Polymer oder ein in einer Lösung eingebrachtes erstes Polymer gemischt wird, wobei das Koordinationspolymer eine metallorganische Gerüststruktur (MOF) mit permanenter Porösität ist. Vorzugsweise wird das Koordinationspolymer, das insbesondere in Form von Kristallen vorliegt, zerkleinert.

Es wird vorzugsweise ein, insbesondere dünner, Film ausgebildet. Zur Ausbildung des Films wird das Material zweckmäßig auf eine Unterlage aufgebracht, die vorzugsweise porös ist, und ein Lösemittel, das in dem Material zum Mischen der Materialien vorgesehen ist, abgedampft. Dieses geschieht vorzugsweise unter einer Schutzgasatmosphäre. Besonders bevorzugt ist es, wenn der Film anschließend in ein Lösemittelbad, insbesondere Methanolbad, eingebracht wird und anschließend getrocknet wird. Durch diesen vorzugsweisen Verfahrensschritt ist es möglich, das Lösemittel im Wesentlichen vollständig aus dem Kompositmaterial heraus zu lösen bzw. aus diesem zu entfernen.

Vorzugsweise ist der Anteil des Koordinationspolymers zwischen 10 Gew. % und 80 Gew. % des hergestellten Kompositmaterials, insbesondere zwischen 20 Gew. % und 50 Gew. %.

Vorzugsweise wird die Oberfläche des Koordinationspolymers wenigstens teilweise zu unpolar oder polar modifiziert. Ein Kompositmaterial, das vorstehend beschrieben wurde, wird vorzugsweise zur Gastrennung, Dämpfetrennung und/oder Pervaporation verwendet. Außerdem ist vorzugsweise ein Gastrennreaktor oder Pervaporationsreaktor mit einem Kompositmaterial, das vorstehend beschrieben wurde, versehen. Es ist außerdem zweckmäßigerweise ein Verfahren zum Betrieb eines Gastrennreaktors oder Pervaporationsreaktors mit einem entsprechenden Kompositmaterial vorgesehen, wobei eine Gasdruckdifferenz zwischen einer ersten Seite und einer zweiten Seite des Kompositmaterials, das vorstehend beschrieben wurde, eingestellt wird und/oder ein Lastwechsel-Adsorptionsverfahren angewendet wird.

Die Erfindung wird nachstehend ohne Beschränkung des allgemeinen Erfindungsgedankens anhand von Ausführungsbeispielen beschrieben, auf die bezüglich aller im Text nicht näher erläuterten erfindungsgemäßen Einzelheiten ausdrücklich verwiesen wird. Es zeigen:
- Fig. 1: ein bevorzugtes Reaktionsschema zur Modifizierung der Oberfläche eines Koordinationspolymers,
- Fig. 2: eine Rasterelektronenmikroskop-Aufnahme eines erfindungsgemäßen Films,
- Fig. 3: eine Rasterelektronenmikroskop-Aufnahme eines weiteren erfindungsgemäßen Films und
- Fig. 4: eine Rasterelektronenmikroskop-Aufnahme eines weiteren erfindungsgemäßen Films.

Schon länger bekannte Stoffklassen von porösen Feststoffen werden als Metallorganische Gerüststrukturen (englisch: Metal Organic Frameworks=MOFs) oder Koordinationspolymere bezeichnet. Die von Alfred Werner entwickelte Theorie von Koordinationsverbindungen [A. Werner, Z. Anorg. Allg. Chem. 3 (1893) 267] ermöglichte es erstmals, die experimentellen Ergebnisse der anorganischen Komplexchemie zu verstehen. Durch Zusatz organischer, zur Komplexbildung fähiger Moleküle wie z.B. von Diaminen oder Disäuren zu gelösten Salzen werden stabile MOFs erhalten. Die Abstände zwischen den durch die Metallionen als Koordinationszentren gegebenen Gitterpunkten können durch die Struktur, besonders der organischen Komponenten, in einem weiten Bereich eingestellt werden und ergeben mikro- bis mesoporöse Stoffe. Der Abstand der funktionellen Gruppen der organischen Bestandteile gibt wesentlich die Porengröße vor, die Art der metallischen Komponente(n) entscheidet über eventuelle katalytischen Eigenschaften. MOFs bzw. Koordinationspolymere können so vielfältig variiert werden und sind umfangreich dokumentiert [S. Kitagawa, et al. Angew. Chem. Int. Ed. 43 (2004) 2334].

Vom Aufbau des Koordinationspolymers her kann das große innere Volumen zur Sorption bzw. Kondensation von Gasen und Dämpfen genutzt werden. Weitere Anwendungsmöglichkeiten ergeben sich aus dem Metallbestandteil der MOFs. Die katalytischen Eigenschaften von Metallen bzw. Metallsalzen bleiben auch bei dem chemischen Umbau zu MOFs erhalten bzw. verändern sich. Durch die leicht zugängliche innere Oberfläche können auch verbesserte katalytische Eigenschaften entstehen. MOFs sind in der Regel temperaturbeständig bis >300°C und besitzen je nach Gitterabstand bzw. Porengröße geringe Dichten von 0.8 bis 0.2 g/cm³. MOFs mit katalytischen Eigenschaften sind z.B. ais Katalysatoren für die Hydroformylierung und Hydrierung [Fox und Pesa, US 4,504,684] oder die Epoxidierung [Müller, et al. US 6,624,318 B1] beschrieben.

Da die MOFs aus anorganischen Salzen und organischen Verbindungen, wie z.B. Diaminen und Disäuren, bestehen, ist die Verträglichkeit mit elastomeren und auch glasartigen Polymeren sehr viel größer als mit reinen anorganischen Stoffen wie Zeolite und auch Kohlenstoff-Molekularsiebe. Bisher wurde diese Verbindungsklasse noch nicht zu Polymeren zugesetzt und die Verträglichkeit bzw. die veränderten Eigenschaften in Bezug auf Gaspermeabilität und Selektivität untersucht.

Es wurden MOFs hergestellt, analysiert und zu drei verschiedenen Polymeren mit abgestufter Gaspermeabilität und Gasselektivität zugesetzt. Je nach Dichte von Polymer und zugesetztem Feststoff entspricht der gewichtsnormierte Zusatz von 20 Gew.% bis 30 Gew.% einem Anteil von 20-80 Vol% an dem Film. Da die MOFs als Füllstoffe auch sehr feinkristallin hergestellt werden können oder als sehr weiches, kristallines Material auch zu kleinen Korngrößen bis unterhalb 1 µm zerkleinert werden können, lassen sich bei einer guten Verträglichkeit von MOFs mit dem Polymer auch Kompositmaterialien von einer Filmdicke bis etwa 1 µm durch im Prinzip bekannte Verfahren herstellen.

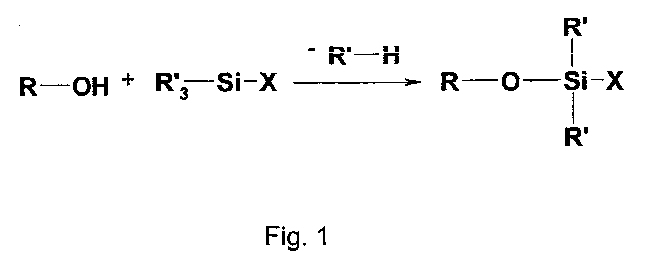

Falls erforderlich kann zur Verbesserung der Kompatibilität zwischen dem MOF als Füllstoff) und Polymer weiterhin eine Oberflächenbehandlung mit bekannten Methoden durchgeführt werden. Dies ist in der Literatur umfangreich dokumentiert (s. z.B.: R.N. Rothon "Particulate Fillers for Polymers" (Rapra Review Report 141), RAPRA Technology Limited, 2002, ISBN: 1 859 57310; Y. S. Lipatov "Polymer reinforcement",Toronto-Scarborough, Ontario, ChemTec Publ., 1995, ISBN: 1-89519-808-9; A. K. Kulshreshtha (Ed.) "Handbook of polymer blends and composites", Shrewsbury, RAPRA Technology Limited, 2002, ISBN: 1-85957-309-6). Zu diesem Zweck können Monomere oder Polymere verwendet werden. Klassische Monomere sind z.B. Silane mit reaktiven Gruppen, die chemisch mit der Feststoffoberfläche reagieren und dabei etwa endständige Hydroxygruppen modifizieren. Dadurch werden die Oberflächeneigenschaften des Feststoffes dauerhaft verändert, z.B. von polar zu unpolar oder von unpolar zu polar. Schematisch ist dies in Fig. 1 dargestellt, in der eine schematische Darstellung einer Oberflächenmodifizierung mit monomeren oder polymeren Reagenzien gezeigt ist.

Solche Reagenzien sind von mehreren Herstellern erhältlich, z.B. von Degussa (Sivento^{™} Silane) oder von Sigma-Aldrich als ADHE-SION PROMOTERS bezeichnet. Dieses können bspw. Methoxytrimethylsilane, Dimethoxydimethylsilane oder Trimethoxy(vinyl)silane und andere sein.

Es wurden erfindungsgemäß durch den Zusatz von MOFs zu verschiedenen Polymeren fehlstellenfreie Komposite aus Polymer und MOFs hergestellt und deren Eigenschaften, besonders die Gastrenneigenschaften untersucht.

Es wurden feinkristalline MOFs hergestellt, zu einer Polymerlösung zugegeben und zu fehlstellenfreien Filmen verarbeitet. Diese Filme werden auf ihre Eigenschaften, besonders die Gastrenneigenschaften, untersucht (s. Beispiele unter 5.)

MOFs wurden durch vereinfachte Synthese hergestellt und erstmalig in zur Gastrennung geeignete Filme eingebracht. Die Gaspermeabilität wurde je nach Polymer um das 1.5 bis 3.7 fache erhöht bei nur wenig bis nicht verringerter Selektivität. In einer Messung mit einem Butan-Methan Gasgemisch wurde eine signifikante Erhöhung der Gasselektivität durch Zusatz von MOF von 10 auf 16 gefunden.

Stark erhöhte Gaspermeabilität und erhöhte Gasselektivität im Gemisch ergeben besser nutzbare Membranen. Die nötige Membranfläche und damit die Kosten für eine gegebene Trennaufgabe werden verringert. Bei Anwendung katalytisch aktiver MOFs werden katalytisch reaktive Membranen erhalten.

### Beispiel 1: Herstellung einer metallorganischen Gerüststruktur (Zn-MOF)

Dybtsev, et al. Angew. Chem. 116 (2004) 5143-5146 beschreiben die Synthese eines hochporösen, dabei aber starr und flexiblen MOFs. Mit N₂ wurde bei 78K eine BET Oberfläche (nach der Methode der Bestimmung der spezifischen Oberfläche von Brunauer, Emmett und Teller) von 1450 m²/g gefunden. Die Synthese wurde in einer mit Teflon ausgekleideten Stahlbombe bei 120°C über 2 Tage durchgeführt. Das entstandene MOF enthielt noch Dimethytformamid (im Folgenden DMF) und Kristallwasser (4 DMF.1/2 H₂O) im inneren Volumen.

Zur Vereinfachung und um kleinere Kristalle zu erhalten, wurde gemäß der vorliegenden Erfindung diese Vorschrift abgeändert und die Synthese drucklos in einem normalen Glaskolben durchgeführt. In 200 ml trockenem DMF wurden 16.85 mmol Terephthalsäure suspendiert und mit 8.33 mmol Diazabicyclooctan versetzt. Unter Rühren wurden 16.81 mmol Zinknitrat-hexahydrat zugegeben, auf 110°C erwärmt und unter Luftausschluss einen Tag gerührt. Die feinen Kristalle wurden abgesaugt und mit warmem DMF nachgewaschen. Der Filterrückstand wurde in Methanol suspendiert, erneut abgesaugt und mit Methanol nachgewaschen. Es wurden 4 g feine, farblose Kristalle erhalten.

Die thermogravimetrische Untersuchung einer getrockneten Probe war bis 300°C stabil (Massenverlust <1 %) und baute zwischen 300 und 350°C 20 % Masse ab, bis 500°C wurden weitere 50 % Masse verloren. Der Rückstand von 30 % blieb bis 1000°C erhalten. Diese Daten zeigen, dass sich das von der Synthese her als Templat im Kristall befindliche DMF durch eine einfache Methanol Behandlung auswaschen lässt und die Kristalle temperaturstabil bis ca. 250°C sind.

### Beispiel 2: Synthese eines Polyamidimides (im Folgenden PAI) als erstes Polymer

Entsprechend einer Vorschrift in DE 42 32 496 wurden 98.8 g Dicarbonsäure der Struktur F mit 46.46 g Diamin der Struktur IV in 840 ml N-Methylpyrrolidon (NMP) gelöst. 28 g LiCl, 224 ml Pyridin und 73.63 g Triphenylphosphin wurden zugegeben und 3 h bei 115°C polymerisiert. Es wurde schnell abgekühlt und in der 20fachen Menge Wasser gefällt. Es wurde mit Methanol ausgekocht und im Vakuum bei 120°C getrocknet. 138 g farbloses Polymer mit reduzierter Viskosität (NMP, 0.5%) von 1.2 dl/g erhalten.

### Beispiel 3: Synthese eines Polyimides (im Folgenden Pl) als erstes Polymer

Nach einer Vorschrift in US 4,912,197, Beispiel 2, wurde ein Polyimid aus 4,4'-[2,2,2-Trifluor-1-(trifluormethyl)ethylidene]bis (1,2-benzenedicarbonsäureanhydride) (6FDA) und 2,3,5,6=Tetramethyl-1,4-phenylendiamin hergestellt, das eine sehr gute Filmbildung bei einer reduzierten Viskosität von 0.70 dl/g (NMP, 0.5%) zeigte.

### Beispiel 4: Herstellung einer metallorganischen Gerüststruktur bei Anwesenheit eines Polyamidimides (PAI)

In einem Glaskolben wurden 3 g PAI aus Beispiel 2 in 50 ml DMF gelöst und mit einer Suspension von 1 g Zinknitrat-Hexahydrat, 0.56 g Terephthalsäure und 0.187 g Diazabicyclooctan in 40 ml DMF versetzt. Es wurde unter Luftausschluss über Nacht bei 110°C gerührt. Am Kolbenrand waren Kristalle mit ausgefälltem Polymer zu finden. Die Herstellung der MOFs in einer Lösung zusammen mit einem PAI ist nur schwer möglich und führt zur Ausfällung des Polymeren. Das so hergestellte Kompositmaterial eignet sich für ein Lastwechsel-Adsorpionsverfahren.

### Beispiel 5: Herstellung von Filmen verschiedener Kompositmaterialien

Filme aus PAI und aus PI wurden in 7-10 % Lösung aus Tetrahydrofuran (im Folgenden THF) hergestellt und auf einer waagerecht ausgerichteten Glasplatte unter einer definierten Atmosphäre aus Argon abgedampft. Filme aus Polydimethylsiloxan (im Folgenden PDMS, Dehesive®, Wacker) wurden aus Essigsäureethylester (im Folgenden EE) und gleicher Konzentration hergestellt und auf einer Teflon-beschichteten, waagerecht ausgerichteten Platte ebenso abgedampft.

Filme mit Zn-MOF wurden aus THF (PAI, Pl) oder EE (PDMS) wie oben beschrieben hergestellt. Allerdings wurde zunächst das Zn-MOF in wenig Lösemittel in einem Glaskolben in einem Ultraschallbad für 15 min. gerührt. Die Lösung des Polymers PAI, PI und PDMS wurde jeweils zugegeben und über Nacht weiter gerührt. Diese Filme enthielten 30 Gew% Zn-MOF aus Beispiel 1 und waren flexibel.

Die so gewonnenen Filme wurden über Nacht in ein Methanolbad eingelegt, zunächst für 2 h an der Luft getrocknet und danach im Vakuumtrockenschrank bei 120°C und >10 mbar ölfreiem Vakuum getrocknet.

### Beispiel 6: Messung von Gaspermeation, Diffusionskoeffizient und Sorptionskoeffizient mit Reingasen

Die aus Beispiel 5 erhaltenen Filme aus Kompostmaterialien MOF in PAI, MOF in Pl und MOF in PDMS wurden mit Reingasen in einer Gasmessapparatur [Al-Masri, et al. Macromolecules 32 (1999) 7853-7858] vermessen. Die Permeabilität (P) wurde aus dem linearen Anstieg des Druckes mit der Zeit und der Filmdicke (I) berechnet. Der Diffusionskoeffizient (*Dₐ*) wurde aus dem time-lag (θ) und der Filmdicke berechnet (*D*a=I²/6 8) und der Sorptionskoeffizient (*S*ₐ) durch Sa=P/*D*a ermittelt.

In Tabelle 1 sind die Messergebnisse zusammengefasst. Der Diffusionskoeffizient (*Dₐ*) ist in cm²/s x 10⁻⁸, der Sorptionskoeffizient (*S*ₐ) in cm³(N)/cm³ cmHg x 10⁻³ und die Permeabilität (P) in Barrer.

**Tab. 1. Gasdaten für Polymer PAI aus Beispiel 2.**

| (Filmdicke: 45µm) | | | | | | | |
|---|---|---|---|---|---|---|---|
| **GAS** | ***D*ₐ** | ***D*ₐ(X/N₂)** | ***S*ₐ** | ***S*ₐ(X/N₂)** | **P** | **P(X/N₂)** | **GAS** |
| O2 | 4.87 | 4.2 | 17.8 | 1.25 | 8.69 | 5.26 | O2 |
| N2 | 1.16 | 1.0 | 14.3 | 1.00 | 1.65 | 1.00 | N2 |
| He | 840 | 720 | 1.05 | 0.07 | 83.4 | 50.4 | He |
| H2 | 270 | 230 | 2.94 | 0.21 | 79.2 | 47.9 | H2 |
| CO2 | 1.09 | 0.93 | 430 | 30.40 | 46.7 | 28.3 | CO2 |
| CH4 | 0.17 | 0.15 | 41.7 | 2.93 | 0.94 | 0.57 | CH4 |

**Tab. 2. Gasdaten für PAI aus Beispiel 2 mit 30 Gew% Zn-MOF aus Beispiel 1.**

| (Filmdicke: 75µm) | | | | | | | |
|---|---|---|---|---|---|---|---|
| **GAS** | ***D*ₐ** | ***D*ₐ(X/N₂)** | ***S*ₐ** | ***S*ₐ(X/N₂)** | **P** | **P(X/N₂)** | **GAS** |
| O2 | 24.1 | 4.3 | 8.75 | 1.11 | 21.1 | 4.77 | O2 |
| N2 | 5.59 | 1.0 | 7.91 | 1.00 | 4.4 | 1.00 | N2 |
| He | 4000 | 720 | 0.49 | 0.06 | 196 | 44.3 | He |
| H2 | 1300 | 240 | 1.44 | 0.18 | 191 | 43.1 | H2 |
| CO2 | 5.78 | 1.03 | 188 | 23.80 | 109 | 24.6 | CO2 |
| CH4 | 0.86 | 0.15 | 31.2 | 3.94 | 2.7 | 0.60 | CH4 |

**Tab. 3. Gasdaten für PI aus Beispiel 3.**

| (Filmdicke: 27µm) | | | | | | | |
|---|---|---|---|---|---|---|---|
| **GAS** | ***D*ₐ** | ***D*ₐ(X/N₂)** | ***S*ₐ** | ***S*ₐ(X/N₂)** | **P** | **P(X/N₂)** | **GAS** |
| O2 | 62.9 | 2.64 | 27.3 | 1.29 | 171.0 | 3.63 | O2 |
| N2 | 23.8 | 1.00 | 21.2 | 1.00 | 46.9 | 1.00 | N2 |
| He | 191.0 | 8.03 | 21.6 | 1.02 | 458.0 | 9.75 | He |
| H2 | 171.0 | 7.19 | 37.9 | 1.79 | 743.0 | 15.80 | H2 |
| CO2 | 23.6 | 0.99 | 425.0 | 20.08 | 1000.0 | 21.40 | CO2 |
| CH4 | 4.1 | 0.17 | 107.0 | 5.04 | 43.4 | 0.92 | CH4 |

**Tab. 4. Gasdaten für PI (Beispiel 3) mit 30 Gew% Zn-MOF (Beispiel 1).**

| (Filmdicke: 91 µm) | | | | | | | |
|---|---|---|---|---|---|---|---|
| **GAS** | ***D*ₐ** | ***D*ₐ(X/N₂)** | ***S*ₐ** | ***S*ₐ(X/N₂)** | **P** | **P(X/N₂)** | **GAS** |
| O2 | 340 | 2.85 | 15.5 | 1.06 | 526 | 3.02 | O2 |
| N2 | 120 | 1.00 | 14.6 | 1.00 | 174 | 1.00 | N2 |
| He | 6900 | 57.80 | 1.6 | 0.11 | 1100 | 6.31 | He |
| H2 | 6000 | 50.10 | 3.2 | 0.22 | 1890 | 10.80 | H2 |
| CO2 | 75 | 0.63 | 440.0 | 30.17 | 3330 | 19.10 | CO2 |
| CH4 | 35 | 0.30 | 47.9 | 3.27 | 170 | 0.98 | CH4 |
| Xe | 2.31 | 0.02 | 310.0 | 21.40 | 72 | 0.41 | Xe |

**Tab. 5. Gasdaten für PDMS nach Beispiel 5.**

| (Filmdicke: 600µm) | | | | | | | |
|---|---|---|---|---|---|---|---|
| **GAS** | ***D*ₐ** | ***D*ₐ(X/N₂)** | ***S*ₐ** | ***S*ₐ(X/N₂)** | **P** | **P(X/N₂)** | **GAS** |
| O2 | 1930 | 1.26 | 3.01 | 1.71 | 580 | 2.16 | O2 |
| N2 | 1530 | 1.00 | 1.76 | 1.00 | 269 | 1.00 | N2 |
| He | 8980 | 5.87 | 0.43 | 0.25 | 389 | 1.45 | He |
| H2 | 6830 | 4.46 | 0.99 | 0.56 | 673 | 2.50 | H2 |
| CO2 | 1620 | 1.06 | 17.50 | 9.94 | 2830 | 10.50 | CO2 |
| CH4 | 1330 | 0.87 | 6.29 | 3.58 | 837 | 3.11 | CH4 |

**Tab. 6. Gasdaten für PDMS nach Beispiel 5 mit 30 Gew% Zn-MOF (Beispiel 1).**

| (Filmdicke: 440µm) | | | | | | | |
|---|---|---|---|---|---|---|---|
| **GAS** | ***D*ₐ** | ***D*ₐ(X/N₂)** | ***S*ₐ** | ***S*ₐ(X/N₂)** | **P** | **P(X/N₂)** | **GAS** |
| O2 | 1070 | 1.57 | 7.43 | 1.26 | 793 | 1.98 | O2 |
| N2 | 680 | 1.00 | 5.90 | 1.00 | 401 | 1.00 | N2 |
| He | 4700 | 6.86 | 1.12 | 0.19 | 521 | 1.30 | He |
| H2 | 4030 | 5.92 | 2.37 | 0.40 | 955 | 2.38 | H2 |
| CO2 | 515 | 0.76 | 77.80 | 13.20 | 4010 | 9.98 | CO2 |
| CH4 | 635 | 0.94 | 18.70 | 3.17 | 1190 | 2.96 | CH4 |

### Beispiel 7. Messung von Permeabilität und Selektivität im Gasgemisch n-Butan/Methan.

Ein PDMS Film mit 30 Gew% Zn-MOF aus Beispiel 1 wurde nach Beispiel 5 zu einer Dicke von 200 µm hergestellt. Mit einem Gasgemisch bestehend aus 98 Vol% Methan und 2 Vol% n-Butan wurde bei 30°C und 1.05 bar Feeddruck die Gaspermeabilität und - selektivität mit einer gaschromatographischen Methode gemessen. Die n-Butan Permeabilität wurde zu 8400 Barrer gefunden bei einer Selektivität P(Butan/CH4) von 16.2. Aus der Literatur wurde bei einem PDMS-Film von vergleichbarer Dicke nur eine Selektivität von nur 10.3 gefunden [Pinnau et al., J. Membrane Sci. 244 (2004) 227-233].

### Beispiel 8: Modifizierung von Zn-MOF an der Oberfläche

Ein Gramm des in Beispiel 1 hergestellten Zn-MOF wurde in 200 ml 2-Propanol mit Hilfe von Ultraschall suspendiert. Es wurden 0.1 g einer 50 % igen Lösung eines Trimethoxysilylpropyl-modifizierten Polyethylenimines (ABCR) zugegeben und 1 h bei RT gerührt. Danach wurde noch 2 h am Rückfluss gekocht. Nach Rühren über Nacht wurde am Rotationsverdampfer zum Rückstand abgezogen und im Vakuumtrockenschrank bei 105°C über Nacht bei >20 mbar getrocknet. Es wurden 1.05 g eines leicht gelblichen Pulvers erhalten.

### Beispiel 9: Film aus modifiziertem Zn-MOF und PI und Gastrennwerte

Wie in Beispiel 5 wurde ein Film aus PI (nach Beispiel 3) hergestellt. Es wurde ein 180 µm dicker Film erhalten.

**Tab. 7. Gasdaten bestimmt nach Beispiel 6 für Film aus Beispiel 9 mit 30 Gew.% modifiziertem Zn-MOF (Beispiel 8).**

| (Filmdicke: 180 µm) | | | | | | | |
|---|---|---|---|---|---|---|---|
| **GAS** | ***D*ₐ** | ***D*ₐ(X/N₂)** | ***S*ₐ** | ***S*ₐ(X/N₂)** | **P** | **P(X/N₂)** | **GAS** |
| O2 | 350 | 2.21 | 24 | 1.12 | 851 | 2.49 | 02 |
| N2 | 159 | 1.00 | 21 | 1.00 | 342 | 1.00 | N2 |
| He | 7800 | 49.23 | 1.58 | 0.07 | 1240 | 3.61 | He |
| H2 | 200 | 32.73 | 4.49 | 0.21 | 2330 | 6.79 | H2 |
| CO2 | 83.0 | 0.52 | 625 | 28.88 | 5200 | 15.15 | CO2 |
| CH4 | 53.3 | 0.34 | 75.9 | 3.51 | 404 | 1.18 | CH4 |

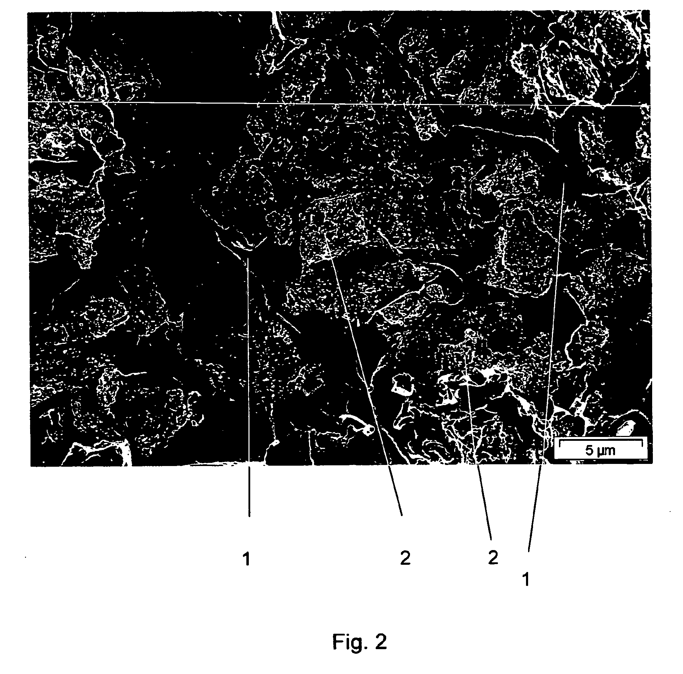

Fig. 2 zeigt eine Rasterelektronenmikroskop-Aufnahme einer Bruchkante eines Films mit 30 Gew. % Zn-MOF aus Beispiel 5 mit einem ersten Polymer PAI (Polyamidimid) in einer 3000fachen Vergrößerung. Die Skala zu dieser Rasterelektronenmikroskop-Aufnahme ist in der rechten unteren Ecke dargestellt. Es sind sehr gut zu erkennen das Membranpolymer 1 in Form es Polyamidimids PAI sowie das Koordinationspolymer 2 in Form des Zn-MOF. Es ist auch sehr gut die Porösität des Koordinationspolymers 2 zu erkennen. Dieses liegt in entsprechenden großen Clustern mit einer Ausdehnung von ca. 1 bis 5 µm vor und ist eingebettet in einer Matrix aus Polyamidimid bzw. des Membranpolymers 1.

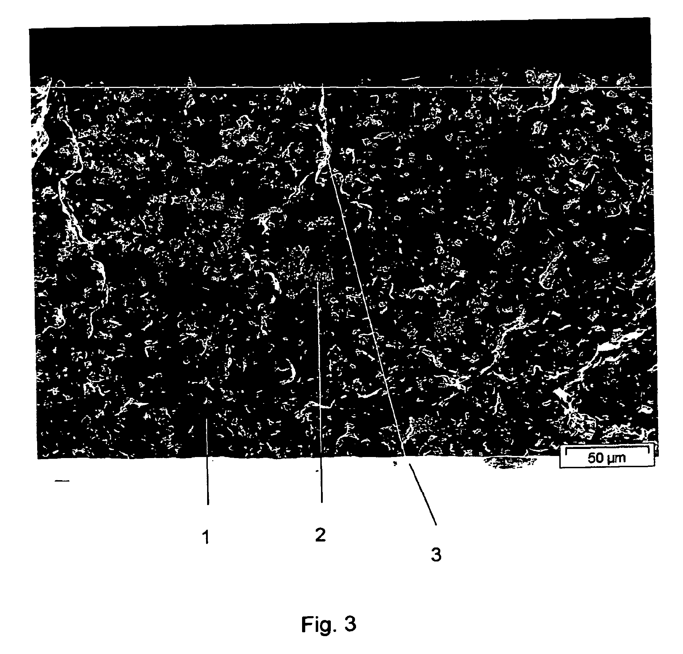

Fig. 3 zeigt eine entsprechende weitere Rasterelektronenmikroskop-Aufnahme eines erfindungsgemäßen Films mit 30 Gew. % Zn-MOF aus Beispiel 5 mit einem Membranpolymer 1 aus Polydimethylsiloxan in einer 300fachen Vergrößerung. Es sind ferner Risse 3 zu erkennen, die aufgrund der Präparation der Bruchkante des Films für die Rasterelektronenmikroskop-Aufnahme entstehen.

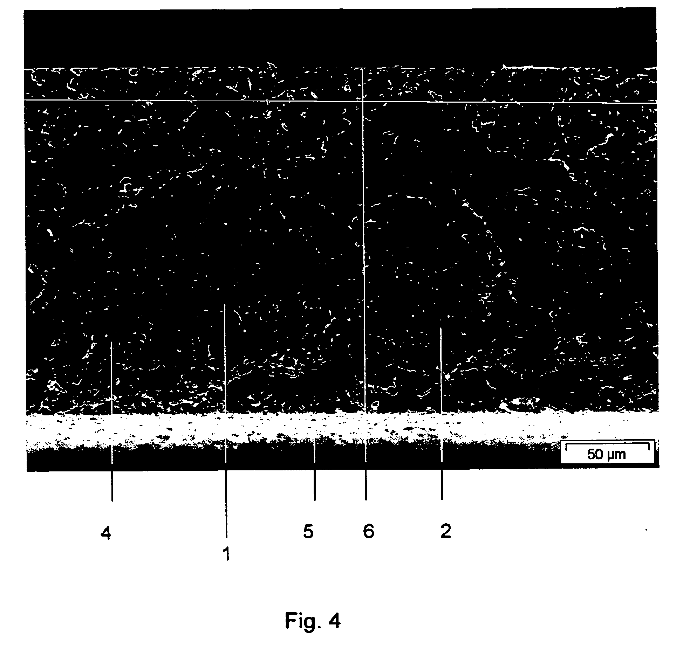

Fig. 4 zeigt eine Rasterelektronenmikroskop-Aufnahme eines erfindungsgemäßen Films mit 30 Gew. % Zn-MOF mit einem Membranpolymer 1 aus Polyimid in einer 300fachen Vergrößerung. In diesem Rasterelektronenmikroskop-Bild sind die Unterseite 5 und die Oberseite 6 gut zu erkennen und außerdem Hohlräume 4, die dadurch entstehen, dass bei der Herstellung der Bruchkante, die in der Rasterelektronenmikroskop-Aufnahme gemäß Fig. 4 gezeigt ist, die MOF-Cluster herausbrechen.

Die Bruchstücke für die rasterelektronenmikroskopischen Aufnahmen gemäß den Figuren 2 bis 4 wurden in flüssigem Stickstoff gebrochen und die Bruchkante in einer Magnetronsputteranlage mit einer Gold/Palladium-Legierung versehen, um gute Rasterelektronenmikroskopaufnahme zu ermöglichen.

### Bezugszeichenliste

- 1: Membranpolymer
- 2: Koordinationspolymer
- 3: Riss
- 4: Hohlraum
- 5: Unterseite
- 6: Oberseite

## Patentansprüche

1. Kompositmaterial, insbesondere Kompositmembran, insbesondere zur Gastrennung, Dämpfetrennung oder Pervaporation, umfassend wenigstens ein erstes Polymer (1) und ein zweites Polymer (2), wobei das zweite Polymer (2) ein Koordinationspolymer ist, **dadurch gekennzeichnet, dass** das Koordinationspolymer (2) eine metallorganische Gerüststruktur (MOF) mit permanenter Porösität ist.

2. Kompositmaterial nach Anspruch 1, **dadurch gekennzeichnet, dass** das Koordinationspolymer (2) in Kristallform, insbesondere in Kristall-Clustern, vorliegt.

3. Kompositmaterial nach Anspruch 1 oder 2, **dadurch gekennzeichnet, dass** das Koordinationspolymer (2) katalytisch aktiv ist.

4. Kompositmaterial nach Anspruch 2 oder 3, **dadurch gekennzeichnet, dass** die Kristallgröße im Bereich von 0,1 bis 10 µm, insbesondere 0,4 bis 1 µm ist.

5. Kompositmaterial nach einem oder mehreren der Ansprüche 1 bis 4, **dadurch gekennzeichnet, dass** das erste Polymer (1) als Polymermatrix ausgebildet ist.

6. Kompositmaterial nach einem oder mehreren der Ansprüche 1 bis 5, **dadurch gekennzeichnet, dass** das erste Polymer (1) ein Material ist, aus dem eine dichte Membran herstellbar ist.

7. Kompositmaterial nach einem oder mehreren der Ansprüche 1 bis 6, **dadurch gekennzeichnet, dass** das Koordinationspolymer (2) eine Elementarzelle mit einer Größe im Bereich von 0,3 bis 10 nm, insbesondere 0,5 bis 1 nm, aufweist.

8. Kompositmaterial nach Anspruch 7, **dadurch gekennzeichnet, dass** in die Elementarzellen des Koordinationspolymers wenigstens ein Interkalat eingebracht ist.

9. Kompositmaterial nach einem oder mehreren der Ansprüche 1 bis 8, **dadurch gekennzeichnet, dass** die Oberfläche des Koordinationspolymers wenigstens teilweise unpolar oder polar modifiziert ist.

10. Kompositmaterial nach einem oder mehreren der Ansprüche 1 bis 9, **dadurch gekennzeichnet, dass** eine Gasselektivität von mehr als 13, insbesondere mehr als 16, für das Verhältnis von n-Butan zu Methan vorgesehen ist.

11. Kompositmembran umfassend eine dünne Schicht aus einem Kompositmaterial nach einem oder mehreren der Ansprüche 1 bis 10, wobei die Schicht auf einer porösen Unterlage aufgebracht ist.

12. Kompositmembran nach Anspruch 11, **dadurch gekennzeichnet, dass** die Dicke der Schicht im Bereich von 0,3 µm bis 2 µm, insbesondere im Bereich von 0,5 µm bis 1 µm ist.

13. Verfahren zur Herstellung eines Kompositmaterials, insbesondere einer Kompositmembran, insbesondere nach einem oder mehreren der Ansprüche 1 bis 10, **dadurch gekennzeichnet, dass** ein Koordinationspolymer (2) in ein, insbesondere flüssiges, erstes Polymer (1) oder in ein in einer Lösung eingebrachtes erstes Polymer gemischt wird, wobei das Koordinationspolymer (2) eine metallorganische Gerüststruktur (MOF) mit permanenter Porösität ist.

14. Verfahren nach Anspruch 13, **dadurch gekennzeichnet, dass** ein, insbesondere dünner, Film ausgebildet wird.

15. Verfahren nach Anspruch 14, **dadurch gekennzeichnet, dass** zur Ausbildung des Films das Material auf eine Unterlage aufgebracht wird und ein Lösemittel abgedampft wird.

16. Verfahren nach Anspruch 15, **dadurch gekennzeichnet, dass** die Unterlage porös ist.

17. Verfahren nach Anspruch 15 oder 16, **dadurch gekennzeichnet, dass** der Film anschließend in einem Lösemittelbad, insbesondere Methanolbad, eingebracht wird und anschließend getrocknet wird.

18. Verfahren nach einem oder mehreren der Ansprüche 13 bis 17, **dadurch gekennzeichnet, dass** der Anteil des Koordinationspolymers zwischen 10 Gew. % und 80 Gew. % des hergestellten Kompositmaterials, insbesondere zwischen 20 Gew. % und 50 Gew. % beträgt.

19. Verfahren nach einem oder mehreren der Ansprüche 13 bis 18, **dadurch gekennzeichnet, dass** die Oberfläche des Koordinationspolymers (2) wenigstens teilweise zu unpolar oder polar modifiziert wird.

20. Verwendung eines Kompositmaterials nach einem oder mehreren der Ansprüche 1 bis 10 zur Gastrennung und/oder Pervaporation.

21. Gastrennreaktor oder Pervaporationsreaktor mit einem Kompositmaterial nach einem oder mehreren der Ansprüche 1 bis 10.

22. Verfahren zum Betrieb eines Gastrennreaktors oder Pervaporationsreaktors nach Anspruch 21, wobei eine Gasdruckdifferenz zwischen einer ersten Seite und einer zweiten Seite des Kompositmaterials nach einem oder mehreren der Ansprüche 1 bis 10 eingestellt wird und/oder ein Lastwechsel-Adsorptionsverfahren angewendet wird.

## Claims

1. Composite material, especially composite membrane, in particular for separating gas, separating vapour or for pervaporation, comprising at least a first polymer (1) and a second polymer (2), which second polymer (2) is a co-ordination polymer, **characterised in that** the coordination polymer (2) is a metal-organic framework (MOF) with permanent porosity.

2. Composite material as claimed in claim 1, **characterised in that** the coordination polymer (2) is present in the form of crystals, in particular in crystal clusters.

3. Composite material as claimed in claim 1 or 2, **characterised in that** the co-ordination polymer (2) is catalytically active.

4. Composite material as claimed in claim 2 or 3, **characterised in that** the crystal size is in the range of 0.1 to 10 µm, in particular 0.4 to 1 µm.

5. Composite material as claimed in one or more of claims 1 to 4, **characterised in that** the first polymer (1) is provided in the form of a polymer matrix.

6. Composite material as claimed in one or more of claims 1 to 5, **characterised in that** the first polymer (1) is a material from which a dense membrane can be produced.

7. Composite material as claimed in one or more of claims 1 to 6, **characterised in that** the co-ordination polymer (2) contains an elementary cell with a size in the range of 0.3 to 10 nm, in particular 0.5 to 1 nm.

8. Composite material as claimed in claim 7, **characterised in that** at least one intercalate is introduced into the elementary cells of the coordination polymer.

9. Composite material as claimed in one or more of claims 1 to 8, **characterised in that** the surface of the co-ordination polymer is modified to render it at least partially non-polar or polar.

10. Composite material as claimed in one or more of claims 1 to 9, **characterised in that** a gas selectivity of more than 13, in particular more than 16, is imparted for the ratio of n-butane to methane.

11. Composite membrane comprising a thin layer of a composite material as claimed in one or more of claims 1 to 10, which layer is applied to a porous backing layer.

12. Composite membrane as claimed in claim 11, **characterised in that** the thickness of the layer is in the range of 0.3 µm to 2 µm, in particular in the range of 0.5 µm to 1 µm.

13. Method of producing a composite material, especially a composite membrane, in particular as claimed in one or more of claims 1 to 10, **characterised in that** a co-ordination polymer (2) is mixed in a specifically liquid first polymer (1) or in a first polymer introduced into a solution, and the co-ordination polymer (2) is a metal-organic framework (MOF) with permanent porosity.

14. Method as claimed in claim 13, **characterised in that** a film, in particular a thin film, is formed.

15. Method as claimed in claim 14, **characterised in that**, in order to form the film, the material is applied to a backing layer and a solvent is evaporated off.

16. Method as claimed in claim 15, **characterised in that** the backing layer is porous.

17. Method as claimed in claim 15 or 16, **characterised in that** the film is then introduced into a solvent bath, in particular a methanol bath, and then dried.

18. Method as claimed in one or more of claims 13 to 17, **characterised in that** the proportion of the co-ordination polymer is between 10 % by weight and 80 % by weight of the resultant composite material, in particular between 20 % by weight and 50 % by weight.

19. Method as claimed in one or more of claims 13 to 18, **characterised in that** the surface of the co-ordination polymer (2) is modified to render it at least partially non-polar or polar.

20. Use of a composite material as claimed in one or more of claims 1 to 10 for separating gas and/or for pervaporation.

21. Gas separation reactor or pervaporation reactor with a composite material as claimed in one or more of claims 1 to 10.

22. Method of operating a gas separation reactor or pervaporation reactor as claimed in claim 21, whereby a difference in gas pressure is set between a first side and a second side of the composite material as claimed in one or more of claims 1 to 10, and/or a load-change adsorption process is applied.

## Revendications

1. Matériau composite, en particulier membrane composite, destiné(e) en particulier à la séparation des gaz, à la séparation des vapeurs ou à la pervaporation, comprenant au moins un premier polymère (1) et un second polymère (2), le second polymère (2) étant un polymère de coordination, **caractérisé**(e) en ce que le polymère de coordination (2) est une structure de squelette organométallique (MOF) de porosité permanente.

2. Matériau composite selon la revendication 1, **caractérisé en ce que** le polymère de coordination (2) se présente sous forme cristalline, en particulier sous forme d'agrégats cristallins

3. Matériau composite selon la revendication 1 ou 2, **caractérisé en ce que** le polymère de coordination (2) catalytiquement actif.

4. Matériau composite selon la revendication 2 ou 3, **caractérisé en ce que** la taille des cristaux se trouve dans la plage de 0,1 à 10 µm, en particulier de 0,4 à 1 µm.

5. Matériau composite selon une ou plusieurs des revendications 1 à 4, **caractérisé en ce que** le premier polymère (1) est réalisé sous la forme d'une matrice polymère.

6. Matériau composite selon une ou plusieurs des revendications 1 à 5, **caractérisé en ce que** le premier polymère (1) est un matériau à partir duquel on peut produire une membrane dense.

7. Matériau composite selon une ou plusieurs des revendications 1 à 6, **caractérisé en ce que** le polymère de coordination (2) comprend une cellule élémentaire dont la taille se trouve dans la plage de 0,3 à 10 nm, en particulier de 0,5 à 1 nm.

8. Matériau composite selon la revendication 7, **caractérisé en ce qu'**un élément intercalaire au moins est introduit dans les cellules élémentaires du polymère de coordination.

9. Matériau composite selon une ou plusieurs des revendications 1 à 8, **caractérisé en ce que** la surface du polymère de coordination est modifiée au moins partiellement de façon à être polaire ou non polaire.

10. Matériau composite selon une ou plusieurs des revendications 1 à 9, **caractérisé en ce qu'**une sélectivité aux gaz supérieure à 13, en particulier supérieure à 16, est prévue pour le rapport entre n-butane et méthane.

11. Membrane composite, comprenant une mince couche d'un matériau composite selon une ou plusieurs des revendications 1 à 10, la couche étant appliquée sur un support poreux.

12. Membrane composite selon la revendication 11, **caractérisée en ce que** l'épaisseur de la couche se trouve dans la plage de 0,3 µm à 2 µm, en particulier dans la plage de 0,5 µm à 1 µm.

13. Procédé de fabrication d'un matériau composite, en particulier d'une membrane composite, en particulier selon une ou plusieurs des revendications 1 à 10, **caractérisé en ce qu'**un polymère de coordination (2) est mélangé dans un premier polymère (1) en particulier liquide, ou dans un premier polymère incorporé à une solution, dans lequel le polymère de coordination (2) est une structure de squelette organométallique (MOF) de porosité permanente.

14. Procédé selon la revendication 13, **caractérisé en ce qu'**on réalise un film, en particulier mince.

15. Procédé selon la revendication 14, **caractérisé en ce que** pour réaliser le film, on applique le matériau sur un support et on évapore un solvant.

16. Procédé selon la revendication 15, **caractérisé en ce que** le support est poreux.

17. Procédé selon la revendication 15 ou 16, **caractérisé en ce que** le film est ensuite introduit dans un bain de solvant, en particulier un bain de méthanol, puis consécutivement séché.

18. Procédé selon une ou plusieurs des revendications 13 à 17, **caractérisé en ce que** la proportion de polymère de coordination se situe entre 10 et 80 % en poids du matériau composite fabriqué, en particulier entre 20 et 50 % en poids.

19. Procédé selon une ou plusieurs des revendications 13 à 18, **caractérisé en ce que** la surface du polymère de coordination (2) est modifiée au moins partiellement de façon à être polaire ou non polaire.

20. Utilisation d'un matériau polymère selon une ou plusieurs des revendications 1 à 10, pour la séparation des gaz et/ou la pervaporation.

21. Réacteur de séparation gazeuse ou réacteur de pervaporation pourvu d'un matériau composite selon une ou plusieurs des revendications 1 à 10.

22. Procédé d'exploitation d'un réacteur de séparation gazeuse ou d'un réacteur de pervaporation selon la revendication 21, dans lequel on prévoit une différence de pression gazeuse entre une première face et une seconde face du matériau composite selon une ou plusieurs des revendications 1 à 10, et/ou l'on utilise un procédé d'adsorption avec alternance de charge.
